# EUROPÄISCHE PATENTSCHRIFT

(11) **EP 1 395 757 B1**
(45) Veröffentlichungstag und Bekanntmachung des Hinweises auf die Patenterteilung: **07.06.2006**
(21) Anmeldenummer: 02754188.7
(22) Anmeldetag: 07.06.2002
(51) Int. Cl.: F16C 11/06

(54) **GELENK, INSBESONDERE KUGELGELENK FÜR FAHRWERKSTEILE IN EINEM KRAFTFAHRZEUG**
JOINT, PARTICULARLY A BALL-AND-SOCKET JOINT FOR CHASSIS PARTS IN A MOTOR VEHICLE
ARTICULATION, EN PARTICULIER ARTICULATION SPHERIQUE POUR PARTIES DE CHASSIS DE VEHICULES AUTOMOBILES

(30) Priorität: 11.06.2001 DE 10127881
(43) Veröffentlichungstag der Anmeldung: 10.03.2004
(73) Patentinhaber: ZF Lemförder Metallwaren AG, 49441 Lemförde (DE)
(72) Erfinder: ABELS, Olaf, 49191 Belm (DE); WOHLERS, Jens, 49448 Lemförde (DE)
(86) Internationale Anmeldenummer: PCT/DE2002/002075
(87) Internationale Veröffentlichungsnummer: WO 2002/101250

(56) Entgegenhaltungen:
- GB-A- 892 025
- US-A- 3 021 157
- US-A- 5 100 254

## Beschreibung

Die Erfindung betrifft ein Gelenk, insbesondere Kugelgelenk für Fahrwerksteile in einem Kraftfahrzeug, mit einem Gelenkgehäuse und einer darin angeordneten Gelenkschale mit Kugel, deren Zapfen aus dem Gelenkgehäuse herausragt und von einem Gummibalg mit Schutzkappe umgriffen ist, wobei mit dem den Zapfen konzentrisch umgebenden Randbereich des Gummibalges ein Ring zur Halterung der Schutzkappe verbunden ist.

Ein bekanntes Gelenk dieser Art gemäß der US-PS 5,100,254 weist u.a. einen Gummibalg mit einem damit verbundenen, im Querschnitt U-förmigen Metallring auf, in dessen U-förmige Ausnehmung die Lippe einer aus Kunststoff bestehenden Schutzkappe eingeklipst wird. Da zum Einklipsen dieser Lippe in den Ring des Gummibalges die Schutzkappe in Richtung der Längsachse nach unten gegen den Gummibalg gedrückt werden muß, ist dieser zwangsläufig einer unerwünschten Verformung unterworfen, da eine Gegendruckkraft mit einem Gegendruckelement fehlt. Demzufolge muß zwangsläufig nach dem Einklipsen die Schutzkappe mit dem zusammengepreßten Gummibalg in die entgegengesetzte Richtung gezogen werden, was wiederum zu einem Ausklipsen der Schutzkappe aus dem Ring führen kann. Nachteilig ist in jedem Fall bei den unterschiedlichen Ausführungsformen dieser Druckschrift, daß stets die Schutzkappe zum Verbinden mit dem Ring in Richtung der Längsachse in Richtung auf die Kugel gegen den Gummibalg gepreßt werden muß. Infolge dieser axialen Kräfte ist eine unerwünschte Deformation des Gummibalges unvermeidlich.

Aus der EP 0 570 736 A1 ist ein gattungsfremdes Gelenk bekannt geworden, das von einer am Gelenkgehäuse des Kugelgelenks befestigten Schutzkappe umgeben ist. Diese Schutzkappe wird mittels eines Halteringes in einer am Gelenkgehäuse umlaufenden Ausnehmung gehaltert. Diese Konstruktion schirmt zwar vorteilhaft den Gummibalg gegen seitliche Wärmeeinwirkungen wie ein Hitzschild ab, kann jedoch ein Eindringen von Partikeln von der Zapfenseite her gegen den Gummibalg nicht verhindern, weil der erforderliche Winkelausschlag des Kugelzapfens zwangsläufig die Größe des nicht abgeschirmten Zwischenraumes zwischen ihm und der Innenseite der Schutzkape bestimmt. Außerdem erfordert diese Konstruktion zwei unterschiedliche Befestigungen, einmal für den Gummibalg und ein weiteres Mal für den Schutzschirm.

Derartige Wärmeschutzeinrichtungen werden immer dann benötigt, wenn Kugelgelenke in der Nähe von Wärmequellen, z.B. von Scheibenbremsen, angebracht werden, ohne daß ausreichender Schutz zur Kühlung besteht oder andere wärmedämmende Maßnahmen getroffen werden können. In diesem Zusammenhang sind Schutzkappen aus Blech bekannt, die entweder am Achsschenkel, am Gelenkgehäuse des Kugelzapfens oder am Querlenker angeordnet sind. Diese werden im Laufe der Achsmontage oder der Montage der Einzelkomponenten angebracht. Der Nachteil sämtlicher dieser Lösungen beruht insbesondere in ihrer aufwendigen und störungsanfälligen Montage oder im Falle der am Gelenkgehäuse angebrachten Lösungen in ihrem starken Einfluß der Gelenkbewegungen auf den möglichen Umschließungswinkel des Bleches um den Dichtungsbalg. Gelenke mit einem großen Winkelausschlag können daher mit der Lösung gemäß der EP 0 570 736 A1 nur unzureichend geschützt werden.

Dabei können Schutzkappen aus Kunststoff oder Gummimaterialien nur wesentlich geringere Spitzentemperaturen als Metall ertragen oder im Fall von Gummimaterialien sogar durch den Fahrtwind der Fahrzeuge verformt und/oder Flatterbewegungen ausgesetzt werden.

Auf den Zapfen aufgepreßte Kappen aus Metall oder Kunststoff hingegen müssen bei der Montage im Fahrzeug orientiert werden und sind mit der Gefahr verbunden, daß sie sich durch ihre geringe Aufpreßlänge bedingt wieder lösen.

Zur Veranschaulichung dieser Probleme wird auf das Werk von Prof. Dipl.-Ing. Jömsen Reimpell "Fahrwerktechnik: Radaufhängungen", 2. Auflage 1988, Seite 132 und 304, hingewiesen, auf welchem Gelenke mit Schutzkappen an der Vorderachsseite eines Kraftfahrzeuges dargestellt sind.

Von diesem Stand der Technik ausgehend, liegt der Erfindung die Aufgabe zugrunde, ein Gelenk der eingangs genannten Gattung dahingehend zu verbessern, daß es bei möglichst großflächigem Schutz des Gummibalges einfach hergestellt und montiert werden kann, ohne dabei den Gummibalg nennenswerten Axialkräften auszusetzen.

Diese Aufgabe wird in Verbindung mit dem eingangs genannten Gattungsbegriff nach einer ersten Ausführungsform dadurch gelöst, daß der Ring an seiner Ringaußenseite zumindest eine Sicke aufweist und in den Randbereich des Gummibalges einvulkanisiert ist, und daß die Schutzkappe auf ihrer Innenseite mit mehreren Vorsprüngen versehen ist, die durch Öffnungen in der Schutzkappe von außen kraft- und formschlüssig gegen die Sicke des Ringes verbiegbar sind. So kann die erwähnte Verformung beispielsweise mittels eines Werkzeuges radial oder zentripetal zum Zapfen bewirkt werden. Zu diesem Zweck müßte zum Beispiel ein Schraubendreher durch die Öffnung in der Schutzkappe gesteckt und der Vorsprung radial gegen die Sicke des Ringes verbogen zu werden, um einen sicheren und festen Sitz der Schutzkappe auf den in den Gummibalg einvulkanisierten Ring zu gewährleisten. Es findet somit eine Verkrallung des Vorsprunges mit dem einvulkanisierten Ring statt.

Dabei weist der Ring vorteilhaft im Querschnitt mehrere, beispielsweise auch vollständig umlaufende Sicken auf, sodass er eine Wellenform bildet, wohingegen die den Gummibalg vollständig umgreifende Schutzkappe mit T-förmigen Ausklinkungen versehen ist, von denen mindestens ein Steg zur Innenseite der Schutzkappe hin abgebogen ist und einen Vorsprung bildet. Dadurch bildet die Ausklinkung zugleich die Öffnung für den Durchgriff eines Werkzeuges, z.B. eines Schraubendrehers, um den Vorsprung durch Verbiegung mit dem Ring des Gummibalges zu verkrallen.

Nach einer zweiten Ausführungsform wird die der Erfindung zugrundeliegende Aufgabe in Verbindung mit dem eingangs genannten Gattungsbegriff dadurch gelöst, daß der Ring in den Randbereich des Gummibalges einvulkanisiert ist und an seiner vom Kugelgelenk abgewandten Seite mehrere Vorsprünge aufweist, die vorgefertigte Öffnungen gleicher Querschnittskonfiguration der Schutzkappe durchgreifen und nach dem Durchgriff durch mechanische oder thermische Verformung den Ring mit der Schutzkappe verbinden. Bei dieser Ausführungsform wird die Schutzkappe mit ihren Öffnungen über die Vorsprünge einvulkanisierten Ringes des Gummibalges gestreift und sodann entweder diese Vorsprünge mittels eines geeigneten Werkzeuges radial umgebogen oder, soweit die Vorsprünge aus Kunststoff bestehen, mittels einer moderaten sowie kurzfristigen Erhitzung, beispielsweise mittels einer thermischen Aufschmelzung, mit einem breiteren Kopf versehen und somit die Schutzkappe unlösbar mit dem Gummibalg verbunden. Bei dieser Lösung umschließt die Schutzkappe den Gummibalg unterbrechungslos, weil die Öffnungen der ersten Lösung zum Durchgriff eines Werkzeuges nicht erforderlich sind.

Nach einer vorteilhaften Weiterbildung der Erfindung werden die Vorsprünge des Ringes von gleich großen und gleichmäßig beabstandeten Zähnen gebildet, die ein entsprechendes Lochbild der Schutzkappe bei deren Aufsetzung durchgreifen. Auch hier sind nennenswerte Axialkräfte nicht zu verzeichnen und bei einer Aufschmelzung von beispielsweise aus Kunststoff bestehenden Vorsprünge auch Radialkräfte nicht erforderlich.

Vorteilhaft bestehen die Ringe aus Metall oder Kunststoff wie PA 66. Der mit einer Sicke versehene Ring besteht vorteilhaft aus gehärtetem Kohlenstoffstahl.

Der mit den Vorsprüngen versehene-Ring im Gummibalg wird entweder aus Metall oder aus einem hochwarmfesten Kunststoff, wie beispielsweise PA 66, PTFE oder PEEK hergestellt. Die Schutzkappe sollte sowohl Wärme- als auch mechanische Einwirkungen vom Gummibalg fernhalten und daher aus Edelstahl, feuerverzinktem Stahlblech oder aus einem glasfaserverstärkten Kunststoff hergestellt werden.

Mehrere Ausführungsbeispiele der Erfindung sind in den Zeichnungen dargestellt. Dabei zeigen:
Figur 1 bis 1 c die einzelnen Phasen der ersten Lösung zur Verbindung einer Schutzkappe mit einem Gummibalg, und zwar:
   Figur la die perspektivische Ansicht eines Kugelgelenks ohne Gummibalg und
   Schutzkappe,
   Figur 1b die Ansicht von Figur 1a mit einem auf dem Gelenkzapfen aufgeschobenen Gummibalg mit einvulkanisiertem Ring,
   Figur 1c die Ansicht von Figur 1b mit einer mit dem Gummibalg verbundenen
   Schutzkappe,
Figur 2 die perspektivische Schnittansicht in Richtung der Pfeile II-II von Figur 1c in gegenüber der Figur 1c vergrößerter Darstellung,
Figur 3 die Ausschnittvergrößerung III von Figur 2,
Figur 4 die diametrale Schnittansicht durch den Gummibalg mit einvulkanisiertem Ring,
Figur 5 die Ausschnittvergrößerung V von Figur 4,
Figur 6 die diametrale Schnittansicht des in den Gummibalg einzuvulkanisierenden Ringes,
Figur 7a bis 7c die einzelnen Phasen einer zweiten Ausführungsform zur Verbindung eines Gummibalges mit einer Schutzkappe, und zwar:

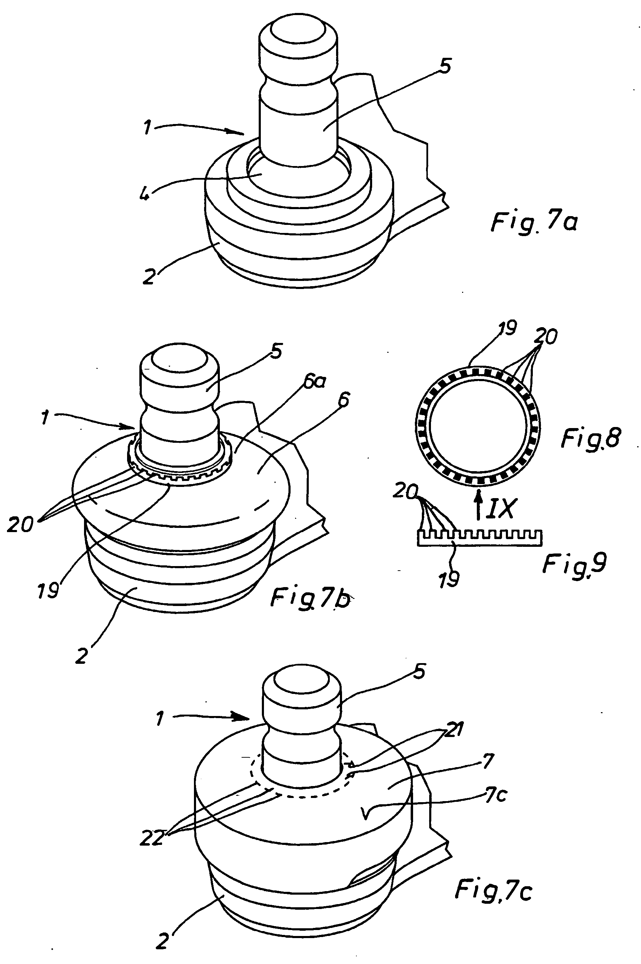

   Figur 7a die perspektivische Ansicht eines Kugelgelenks ohne den Gummibalg und ohne Schutzkappe,
   Figur 7b die Ansicht von Figur 7a mit einem aufgesetzten Gummibalg mit einem einvulkanisierten Ring mit axial vorspringenden Zähnen,
   Figur 7c die Ansicht von Figur 7b nach dem Aufsetzen der Schutzkappe und der thermoplastischen Verformung der ehemals herausragenden Zähne,
Figur 8 die Draufsicht auf den Ring von Figur 7b und
Figur 9 die Seitenansicht des Ringes in Richtung des Pfeiles IX von Figur 8.

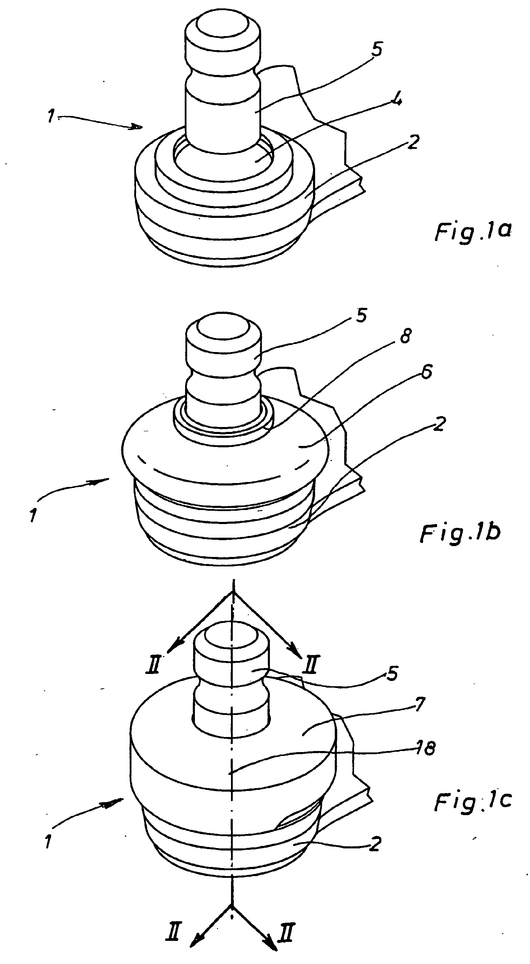

In den Figuren 1 bis 6 sind übereinstimmende Teile stets mit gleichen Bezugsziffern bezeichnet. Das Kugelgelenk 1 gemäß Figur 1 zur Anbringung zwischen Fahrwerksteilen in einem Kraftfahrzeug ist mit einem Gelenkgehäuse 2 und einer darin angeordneten Gelenkschale 3 versehen, welche die Kugel 4 großflächig umgreift, deren Zapfen 5 aus dem Gelenkgehäuse 2 herausragt.

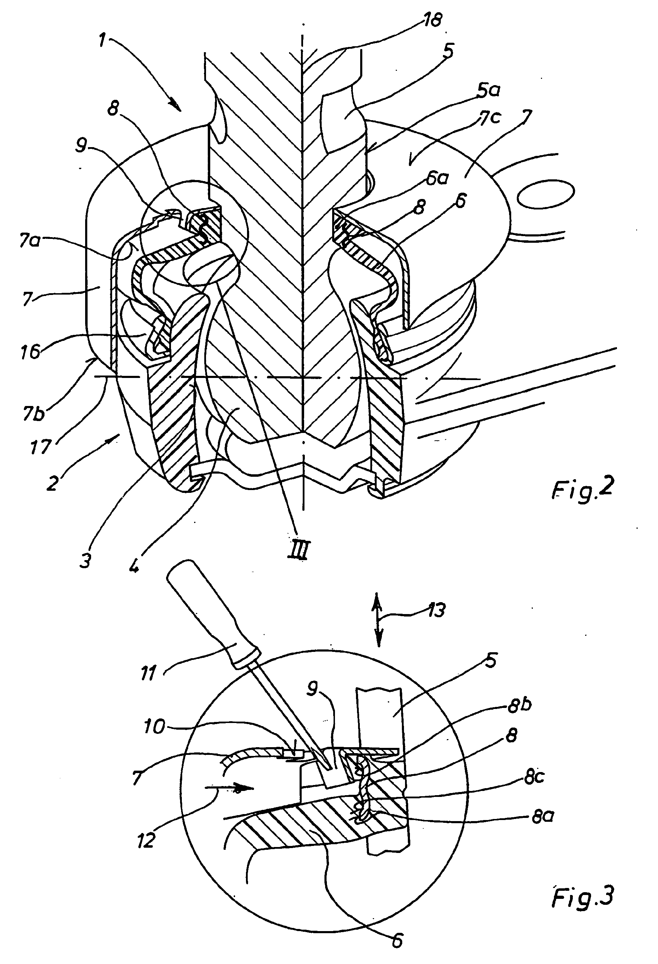

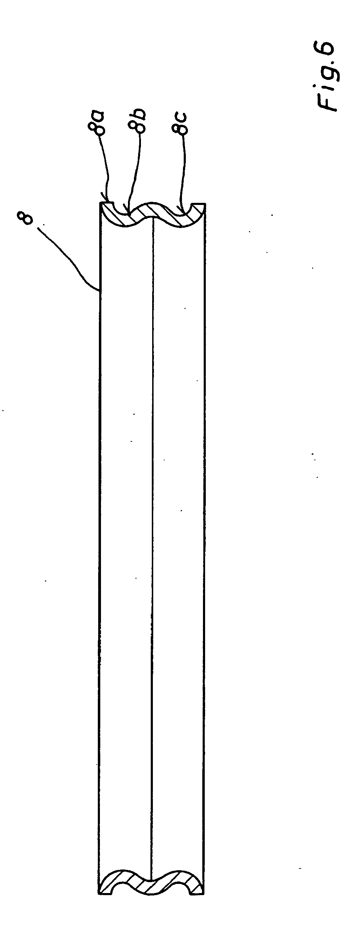

Dieser Zapfen 5 wird gemäß Figur 2 von einem Gummibalg 6 mit Schutzkappe 7 umgriffen, wobei in den den Zapfen 5 konzentrisch umgebenden Randbereich 6a des Gummibalges 6 ein Ring 8 zur Halterung der Schutzkappe 7 einvulkanisiert ist. Dieser Ring 8 weist an seiner Ringaußenseite 8a mindestens eine umlaufende Sicke 8b, 8c auf (s. Figur 6).

Die Schutzkappe 7 ist auf ihrer Innenseite 7a mit mehreren Vorsprüngen 9 versehen, von denen in Figur 2 nur einer dargestellt ist.

Gemäß Figur 3 kann dieser Vorsprung 9 mittels eines Werkzeuges 11, im dargestellten Fall z.B. mit einem Schraubendreher, radial in Richtung des Pfeiles 12 gegen den Zapfen 5 und damit kraft- und formschlüssig gegen die Sicke 8b oder 8c des Ringes 8 verbogen werden. Dadurch verkrallt sich dieser Vorsprung mit dem die Sicke 8b und 8c umgebenden Material des Gummibalges 6, in welchen der Ring 8 einvulkanisiert ist. Dadurch entsteht ein unverrückbarer Sitz der Schutzkappe 7 auf dem Gummibalg 6, ohne daß auf letzterem 6 in Richtung des Doppelpfeiles 13 axiale Kräfte ausgeübt werden müssen. Da nunmehr die Schutzkappe 7 orientiert einerseits auf dem Gummibalg 6 und andererseits auf dem Zapfen 2 festgesetzt ist, kann sie gemeinsam mit dem Gummibalg 6 dem jeweils gewünschten und/oder erforderlichen Winkelausschlag folgen, ohne irgendwelche Kräft auf das Kugelgelenk 1 auszuüben.

Im dargestellten Fall weist der Ring 8 im Querschnitt eine Wellenform auf. Dadurch entstehen mehrere Sicken 8b und 8c an seiner Außenseite, so daß die Vorsprünge 9 wahlweise in die eine oder andere Sicke 8b oder 8c greifen und sich mit dem davor befindlichen Gummimaterial des Gummibalges 6 verkrallen können.

Die Vorsprünge 9 können eine x-beliebige Form aufweisen und werden im dargestellten Fall vom Steg T-förmiger Ausklinkungen 10 gebildet, deren Steg zur Innenseite 7a der Schutzkappe 7 hin abgebogen ist und so den Vorsprung 9 bildet.

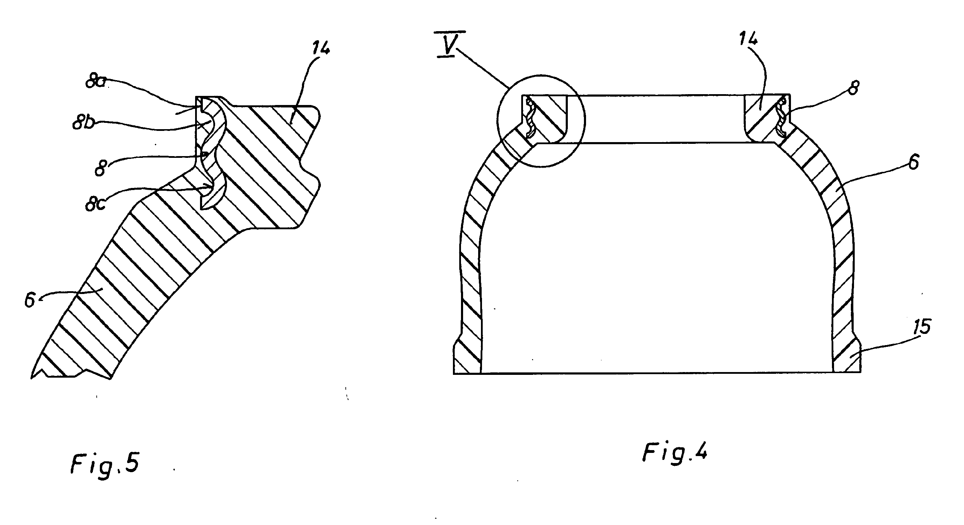

Aus den Figuren 4 und 5 ist die Lage des in den Gummibalg 6 einvulkanisierten Ringes 8 deutlich zu erkennen. Der Gummibalg 6 sitzt mit einem Ring 14 und deren ringförmigen Innenvorsprüngen reibschlüssig am Außenumfang 5a des Zapfens 5 an (s. Figur 5). An seinem entgegengesetzten Ende ist der Gummibalg 6 mit einem Außenring 15 (s. Figur 4) versehen, der formschlüssig an einem Umschließungsring 16 gehaltert ist, der seinerseits am Gelenkgehäuse 2 festgesetzt ist, wie aus Figur 2 entnommen werden kann.

Wie deutlich aus den Figuren 1 bis 3 ersichtlich ist, gewährleistet diese Lösung nicht nur eine fahrzeugorientierte Verbindung des Gummibalges 6 mit der Schutzkappe 7, welche den Gummibalg 6 vollständig sowohl gegen Hitzeeinwirkungen als auch gegen Windbewegungen und Steinschlag schützt. Zu diesem Zweck wird auf die linke Figurenhälfte von Figur 2 verwiesen, weil in der rechten Figurenhälfte zur Freilegung des Umschließungsringes 16 der Schutzkappe 7 im unteren Bereich abgeschnitten dargestellt ist. Dadurch kann die Schutzkappe 7 mit ihrem unteren Randbereich 7b bis über die Meridianebene 17 des Kugelgelenks 1 geführt werden. Die Längssymmetrieachse des Zapfens 5 ist mit 18 bezeichnet.

Die zweite Ausführungsform der Erfindung ist in den Figuren 7a bis 9 dargestellt. Dabei sind mit den Figuren 1 bis 6 übereinstimmende Teile mit gleichen Bezugsziffern bezeichnet. Bei dieser Ausführungsform weist der in den Randbereich 6a des Gummibalges 6 einvulkanisierte Ring 19 an seiner vom Kugelgelenk 1 abgewandten Seite mehrere Vorsprünge 20 auf, die vorgefertigte Öffnungen 21 gleicher Querschnittskonfiguration der Schutzkappe 7 durchgreifen und nach dem Durchgriff entweder durch mechanische oder durch thermische Verformung den Ring 19 und damit den Gummibalg 6 mit der Schutzkappe 7 verbinden.
Wie insbesondere aus den Figuren 8 und 9 entnommen werden kann, werden die Vorsprünge 20 des Ringes 19 von gleich großen und gleichmäßig beabstandeten Zähnen gebildet, die in ein entsprechendes Lochbild 22 der Schutzkappe 7 bei deren Aufsetzung eingreifen. Dabei sind zwei unterschiedliche Ausführungsformen möglich:

Nach einer ersten Ausführungsform kann der Ring 19 aus Metall bestehen mit nur wenigen, jedoch die Öffnungen 21 der Schutzkappe 7 mit einer gewissen Länge durchgreifenden Vorsprüngen 20 versehen werden, die nach dem Aufsetzen der Schutzkappe 7 auf den Gummibalg 6 beispielsweise mittels einer Zange in eine der beiden möglichen Verformungsrichtungen umgebogen werden können und dadurch die Schutzkappe 7 formschlüssig mit dem Gummibalg 6 verbinden.

Nach einer zweiten Ausführungsform kann der Ring 19 - wie dargestellt - aus einem Kunststoff-Spritzgießteil vorgefertigt und in den Gummibalg 6 einvulkanisiert werden. Nach dem Aufsetzen der Schutzkappe 7 mit einem dem Bild der vorspringenden Zähne 20 entsprechenden Lochbild 22 werden die über die Oberfläche 7c der Schutzkappe 7 hinausragenden Enden der Zähne 20, beispielsweise durch eine kurzzeitige und örtlich begrenzte Erhitzung, z.B. mittels eines Widerstands- oder Induktionsdrahtes, zur Bildung eines das Lochbild 22 übergreifenden Materialkopfes abgeschmolzen und dadurch die Schutzkappe 7 fest mit dem Gummibalg 6 verbunden werden. Diese Lösung ist mit dem Vorteil einer vollständigen, keine Durchbrechungen 10 (s. Figur 3) aufweisenden Schutzkappe 7 verbunden. Da auch hier die Schutzkappe 7 fahrzeugorientiert mit dem Gummibalg 6 verbunden ist, weist diese Lösung darüber hinaus die gleichen Vorteile wie die erste Ausführungsalternative gemäß den Figuren 1 bis 6 auf.

Die Ringe 8 und 19 können aus Stahl oder Kunststoff, beispielsweise aus PA 66 hergestellt werden. Es ist jedoch auch möglich, den mit den Sicken 8b und 8c versehenen Ring 8 aus gehärtetem Kohlenstoffstahl herzustellen.

Der mit den Vorsprüngen 20 versehene Ring 19 gemäß der zweiten Ausführungsform der Figuren 7a bis 9 besteht entweder aus Metall, z.B. zur mechanischen Verformung der Vorsprünge 20 oder aus einem hochwarmfesten Kunststoff, wie PA 66, PTFE oder PEEK, um die die Schutzkappe 7 im Lochbild 22 durchgreifenden Zähne 20 durch kurzzeitiges Erhitzen zu einem Nietkopf abzuschmelzen.

Die Schutzkappe 7 besteht vorteilhaft aus Edelstahl, feuerverzinktem Stahlblech oder einem glasfaserverstärkten Kunststoff, um den Gummibalg 6 sowohl vor thermischen Einflüssen als auch vor mechanischen Kräften zu schützen.

### Bezugszeichenliste:

- Kugelgelenk: 1
- Gelenkgehäuse: 2
- Gelenkschale: 3
- Gelenkkugel: 4
- Zapfen: 5
- Außenumfang des Gelenkzapfens 5: 5a
- Gummibalg: 6
- Randbereich des Gummibalges 6: 6a
- Schutzkappe: 7
- Innenseite der Schutzkappe 7: 7a
- Randbereich der Schutzkappe 7: 7b
- Oberfläche der Schutzkappe 7: 7c
- Ringe: 8, 19
- Außenseite des Ringes 8: 8a
- Sicken des Ringes 8: 8b, 8c
- Vorsprünge: 9
- T-förmige Ausklinkungen: 10
- Werkzeug: 11
- Pfeil: 12
- Doppelpfeil: 13
- Innenring: 14
- Innenvorsprung des Innenringes 14: 14a
- Außenring: 15
- Umschließungsring: 16
- Meridianebene: 17
- Längssymmetrieachse des Zapfens 5: 18
- Zähne: 20
- Öffnungen: 21
- Lochbild: 22

## Patentansprüche

1. Gelenk, insbesondere Kugelgelenk für Fahrwerksteile in einem Kraftfahrzeug, mit einem Gelenkgehäuse und einer darin angeordneten Gelenkschale mit Kugel, deren Zapfen aus dem Gelenkgehäuse herausragt und von einem Gummibalg mit Schutzkappe umgriffen ist, wobei mit dem den Zapfen konzentrisch umgebenden Randbereich des Gummibalges ein Ring zur Halterung der Schutzkappe verbunden ist,
**dadurch gekennzeichnet, dass**
der Ring (8) an seiner Ringaußenseite (8a) zumindest eine Sicke (8b, 8c) aufweist und in den Randbereich (6a) des Gummibalges (6) einvulkanisiert ist, und daß die Schutzkappe (7) auf ihrer Innenseite (7a) mit mehreren Vorsprüngen (9) versehen ist, die durch Öffnungen (10) in der Schutzkappe (7) von außen kraft- und formschlüssig gegen die Sicke (8b, 8c) des Ringes (8) verbiegbar sind.

2. Gelenk nach Anspruch 1,
**dadurch gekennzeichnet, dass**
die Vorsprünge (9) durch Öffnungen (10) in der Schutzkappe (7) von außen mittels eines Werkzeuges (11) zentripetal oder radial zum Zapfen (5) verbiegbar sind.

3. Gelenk nach Anspruch 1 oder 2,
**dadurch gekennzeichnet, dass**
der Ring (8) im Querschnitt eine Wellenform aufweist.

4. Gelenk nach Anspruch 1 oder 2,
**dadurch gekennzeichnet, dass**
die den Gummibalg (6) vollständig umgreifende Schutzkappe (7) mit T-förmigen Ausklinkungen (10) versehen ist, von denen mindestens ein Steg (9) zur Innenseite (7a) der Schutzkappe (7) hin abgebogen ist und einen Vorsprung (9) bildet.

5. Gelenk, insbesondere Kugelgelenk für Fahrwerksteile in einem Kraftfahrzeug, mit einem Gelenkgehäuse und einer darin angeordneten Gelenkschale mit Kugel, deren Zapfen aus dem Gelenkgehäuse herausragt und von einem Gummibalg mit Schutzkappe umgriffen ist, wobei mit dem den Zapfen konzentrisch umgebenden Randbereich des Gummibalges ein Ring zur Halterung der Schutzkappe verbunden ist,
**dadurch gekennzeichnet, dass**
der Ring (19) in den Randbereich (6a) des Gummibalges (6) einvulkanisiert ist und an seiner vom Kugelgelenk (1) abgewandten Seite mehrere Vorsprünge (20) aufweist, die vorgefertigte Öffnungen (21) gleicher Querschnittskonfiguration der Schutzkappe (7) durchgreifen und nach dem Durchgriff durch mechanische oder thermische Verformung den Ring (19) mit der Schutzkappe (7) verbinden.

6. Gelenk nach Anspruch 5,
**dadurch gekennzeichnet, dass**
die Vorsprünge (20) des Ringes (19) von gleich großen und gleichmäßig beabstandeten Zähnen gebildet werden, die in ein entsprechendes Lochbild (22) der Schutzkappe (7) bei deren Aufsetzung eingreifen.

7. Gelenk nach einem der Ansprüche 1 bis 6,
**dadurch gekennzeichnet, dass**
die Ringe (8, 19) aus Stahl oder Kunststoff wie PA 66 bestehen.

8. Gelenk nach einem der Ansprüche 1 bis 7,
**dadurch gekennzeichnet, dass**
der mit einer Sicke (8b, 8c) versehene Ring (8) aus gehärtetem Kohlenstoffstahl besteht.

9. Gelenk nach einem der Ansprüche 1 bis 7,
**dadurch gekennzeichnet, dass**
der mit den Vorsprüngen (20) versehene Ring (19) im Gummibalg (6) entweder aus Metall oder aus einem hochwarmfesten Kunststoff, wie PA 66, PTFE oder PEEK. hergestellt ist.

10. Gelenk nach einem der Ansprüche 1 bis 9,
**dadurch gekennzeichnet, dass**
die Schutzkappe (7) aus Edelstahl, feuerverzinktem Stahlblech oder einem glasfaserverstärkten Kunststoff besteht.

## Claims

1. Joint, in particular a ball-and-socket joint, for chassis parts in a motor vehicle, with a joint housing and a joint shell with a ball disposed therein, the pin of which projects out from the joint housing and is surrounded by a rubber bellows with a protective cap, a ring for retaining the protective cap being joined to the peripheral region of the rubber bellows concentrically surrounding the pin,
**characterised in that**
the ring (8) has at least one bead (8b, 8c) on its ring external face (8a) and is vulcanised into the peripheral region (6a) of the rubber bellows (6), and the protective cap (7) is provided with several projections (9) on its internal face (7a) which can be bent through orifices (10) in the protective cap (7) from outside in a non-positive and positive fit against the bead (8b, 8c) of the ring (8).

2. Joint as claimed in claim 1,
**characterised in that**
the projections (9) can be bent centripetally or radially with respect to the pin (5) through orifices (10) in the protective cap (7) from outside by means of a tool (11).

3. Joint as claimed in claim 1 or 2,
**characterised in that**
the ring (8) has a waved shape in cross-section.

4. Joint as claimed in claim 1 or 2,
**characterised in that**
the protective cap (7) completely surrounding the rubber bellows (6) is provided with T-shaped cut-outs (10), from which at least one web (9) is bent back towards the internal face (7a) of the protective cap (7) and forms a projection (9).

5. Joint, in particular a ball-and-socket joint, for chassis parts in a motor vehicle, with a joint housing and a joint shell with a ball disposed therein, the pin of which projects out from the joint housing and is surrounded by a rubber bellows with a protective cap, a ring for retaining the protective cap being joined to the peripheral region of the rubber bellows concentrically surrounding the pin,
**characterised in that**
the ring (19) is vulcanised into the peripheral region (6a) of the rubber bellows (6) and has several projections (20) on its side remote from the ball-and-socket joint (1) which extend through prefabricated orifices (21) of the same cross-sectional shape in the protective cap (7) and, once in this extending position, join the ring (19) to the protective cap (7) by mechanical or thermal deformation.

6. Joint as claimed in claim 5,
**characterised in that**
the projections (20) of the ring (19) are provided in the form of uniformly spaced teeth of identical size which engage in a matching hole pattern (22) of the protective cap (7) when the latter is fitted.

7. Joint as claimed in one of claims 1 to 6,
**characterised in that**
the rings (8, 19) are made from steel or plastic, such as PA 66.

8. Joint as claimed in one of claims 1 to 7,
**characterised in that**
the ring (8) provided with a bead (8b, 8c) is made from hardened carbon steel.

9. Joint as claimed in one of claims 1 to 7,
**characterised in that**
the ring (19) provided with projections (20) in the rubber bellows (6) is made from either metal or a highly heat-resistant plastic, such as PA 66, PTFE or PEEK.

10. Joint as claimed in one of claims 1 to 9,
**characterised in that**
the protective cap (7) is made from stainless steel, galvanised steel sheet or a plastic reinforced with glass fibres.

## Revendications

1. Articulation, en particulier articulation à rotule pour éléments de châssis d'un véhicule automobile, comprenant un boîtier d'articulation muni d'un coussinet d'articulation monté dans ce dernier, et d'une rotule dont le pivot ressort à l'extérieur du boîtier d'articulation et est entouré d'un soufflet en caoutchouc équipé d'un chapeau de protection, une bague assurant le maintien du chapeau de protection étant reliée à la partie marginale du soufflet en caoutchouc qui entoure le pivot de façon concentrique,
**caractérisée en ce que**
la bague (8) présente, à sa face annulaire extérieure (8a), au moins une moulure (8b, 8c) et est incorporée par vulcanisation dans la partie marginale (6a) du soufflet en caoutchouc (6), et **en ce que** le chapeau de protection (7) est pourvu, à sa face intérieure (7a), de plusieurs saillies (9) qui peuvent être rabattues, en passant par les ouvertures (10) du chapeau de protection (7), contre la moulure (8b, 8c) de la bague (8), depuis l'extérieur, pour y être appliquées en force avec engagement mécanique.

2. Articulation selon la revendication 1, **caractérisée en ce que** les saillies (9) peuvent être rabattues de façon centripète ou radiale en direction du pivot (5), depuis l'extérieur, au moyen d'un outil (11) engagé à travers des ouvertures (10) ménagées dans le chapeau de protection (7).

3. Articulation selon la revendication 1 ou 2, **caractérisée en ce que** la bague (8) présente en section transversale une forme ondulée.

4. Articulation selon la revendication 1 ou 2, **caractérisée en ce que** le chapeau de protection (7) entourant entièrement le soufflet en caoutchouc (6) est pourvu de languettes découpées (10) en forme de T dont une patte (9) au moins est rabattue vers l'intérieur (7a) du chapeau de protection (7) et forme ainsi la saillie (9).

5. Articulation, en particulier articulation à rotule pour éléments de châssis d'un véhicule automobile, comprenant un boîtier d'articulation muni d'un coussinet d'articulation monté dans ce dernier, et d'une rotule dont le pivot ressort à l'extérieur du boîtier d'articulation et est entouré d'un soufflet en caoutchouc équipé d'un chapeau de protection, une bague assurant le maintien du chapeau de protection étant reliée à la partie marginale du soufflet en caoutchouc qui entoure le pivot de façon concentrique,
**caractérisée en ce que**
la bague (19) est incorporée par vulcanisation dans la partie marginale (6a) du soufflet en caoutchouc (6) et présente, à sa face éloignée de la rotule (1), plusieurs saillies (20) qui traversent des ouvertures préfabriquées (21) de configuration transversale identique, ménagées dans le chapeau de protection (7), et qui, une fois engagées à travers les ouvertures, relient la bague (19) au chapeau de protection (7) grâce à une déformation mécanique ou thermique.

6. Articulation selon la revendication 5, **caractérisée en ce que** les saillies (20) de la bague (19) sont constituées de dents équidistantes de même taille, qui s'emboîtent dans un motif d'ouvertures (22) correspondantes du chapeau de protection (7), lors de la mise en place de ce dernier.

7. Articulation selon l'une des revendications 1 à 6, **caractérisée en ce que** les bagues (8, 19) sont faites en acier ou en une matière plastique telle que du PA 66.

8. Articulation selon l'une des revendications 1 à 7, **caractérisée en ce que** la bague (8) pourvue d'une moulure (8b, 8c) est faite en acier trempé au carbone.

9. Articulation selon l'une des revendications 1 à 7, **caractérisée en ce que** la bague (19) pourvue des saillies (20), incorporée dans le soufflet en caoutchouc (6), est faite, soit en métal, soit en une matière plastique à haute résistance thermique telle que du PA 66, du PTFE ou du PEEK.

10. Articulation selon l'une des revendications 1 à 9, **caractérisée en ce que** le chapeau de protection (7) est fait en acier inoxydable, en tôle d'acier galvanisé à chaud, ou en une matière plastique armée de fibres de verre.
